(19) Europäisches Patentamt
European Patent Office
Office européen des brevets

(11) **EP 3 826 165 B1**

(12) **EUROPEAN PATENT SPECIFICATION**

(45) Date of publication and mention
of the grant of the patent:
**13.03.2024 Bulletin 2024/11**

(21) Application number: **19275126.1**

(22) Date of filing: **20.11.2019**

(51) International Patent Classification (IPC):
*H02M 7/483* (2007.01)  *H02J 3/36* (2006.01)

(52) Cooperative Patent Classification (CPC):
**H02J 3/36; H02M 7/4833; H02M 7/4835;**
H02M 1/0025; Y02E 60/60

(54) **IMPROVEMENTS IN OR RELATING TO POWER DISSIPATING CONVERTERS**

VERBESSERUNGEN AN ODER IM ZUSAMMENHANG MIT LEISTUNGSABFÜHRENDEN
WANDLERN

AMÉLIORATIONS APPORTÉES OU SE RAPPORTANT À DES CONVERTISSEURS DE
DISSIPATION D'ÉNERGIE

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(43) Date of publication of application:
**26.05.2021 Bulletin 2021/21**

(60) Divisional application:
**24155239.7**

(73) Proprietor: **General Electric Technology GmbH**
**5400 Baden (CH)**

(72) Inventor: **Jasim, Omar Fadhel**
**Stafford, ST16 1WS (GB)**

(74) Representative: **Openshaw & Co.**
**8 Castle Street**
**Farnham, Surrey GU9 7HR (GB)**

(56) References cited:
WO-A1-2013/000518   US-A1- 2015 028 826
US-B2- 9 954 358

• **Kamran Sharifabadi: "Design, Control, and Application of Modular Multilevel Converters for HVDC Transmission Systems: Chapter 3: Dynamics and Control" In: "Design, Control, and Application of Modular Multilevel Converters for HVDC Transmission Systems: Chapter 3: Dynamics and Control", 17 October 2016 (2016-10-17), John Wiley & Sons, XP055695559, pages 133-213, * pages 161-166 ***
• **Kamran Sharifabadi ET AL: "Design, Control and Application of Modular Multilevel Converters for HVDC Transmission Systems - Modulation and Submodule Energy Balancing", , 17 October 2016 (2016-10-17), XP055614433, Retrieved from the Internet: URL:https://onlinelibrary.wiley.com/doi/bo ok/10.1002/9781118851555 [retrieved on 2019-08-21]**
• **Kamran Sharifabadi ET AL: "Modulation and Submodule Energy Balancing" In: "Design, Control, and Application of Modular Multilevel Converters for HVDC Transmission Systems, First Edition.", 17 October 2016 (2016-10-17), John Wiley & Sons, Ltd, www.wiley.com/go/Sharifabadi/ModularConver ters, XP055721860, DOI: 10.1002/9781118851555.ch5,**

## Description

This invention relates to a power dissipating converter, for use with a power converter configured to convert between alternating current (AC) power and direct current (DC) power, and a method of controlling such a power dissipating converter.

In HVDC power transmission networks AC power is typically converted to DC power for transmission via overhead lines, under-sea cables and/or underground cables. This conversion removes the need to compensate for the AC capacitive load effects imposed by the power transmission medium, i.e. the transmission line or cable, and reduces the cost per kilometre of the lines and/or cables, and thus becomes cost-effective when power needs to be transmitted over a long distance. DC power is also transmitted directly from offshore wind parks to onshore AC power transmission networks

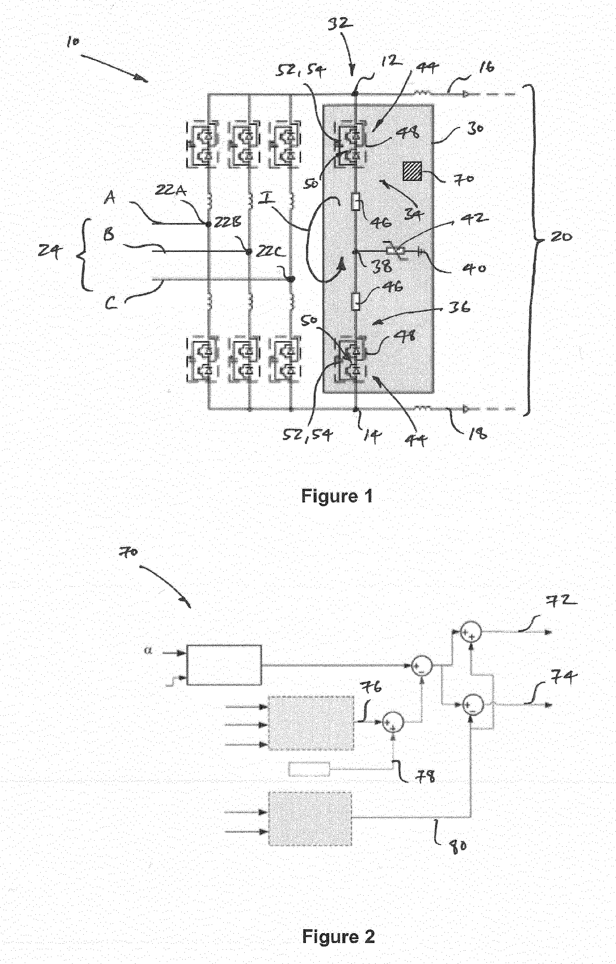

The conversion between DC power and AC power is utilized where it is necessary to interconnect DC and AC networks. In any such power transmission network, converters (i.e. power converters) are required at each interface between AC and DC power to affect the required conversion from AC to DC or from DC to AC. Such power converters may take the form of a voltage source converter 10, as shown in Figure 1, to perform power conversion, although other types of power converter are also possible.

In the example shown the known power converter 10, i.e. voltage source converter, extends between first and second DC terminals 12, 14, which in use are connected with first and second transmission cables 16, 18 of a DC network 20, that in this example takes the form of a DC link to an offshore wind park (not shown). The known power converter 10 is also connected via respective AC terminals 22A, 22B, 22C to three phases A, B, C of an onshore three-phase AC network 24. Other power converter and AC/DC network configurations are, however, also possible.

The DC power received from the DC network 20, i.e. the DC power from the wind park, will, in most instances, be generated continuously, and so creates challenges for the receiving onshore AC network 24, particularly when the AC network 24 is unable to accept the power, e.g. because of a fault with the power converter 10 or in the associated AC network 24 which may result in a reduced power demand by the AC network 24.

Such onshore power converters 10 are therefore sometimes used in combination with a power dissipating converter which temporarily absorbs some or all of the DC power transmitted from the offshore DC network 20 in circumstances when the onshore AC network 24 is unable to accept this power. Power dissipating converters are disclosed in publications US 2015/0028826 A1, WO 2013/000518 A1 and US 9,954,358 B2

The power dissipating converter within such a power conversion scheme is sometimes known as a Dynamic Braking System (DBS).

According to a first aspect of the invention there is provided a power dissipating converter in accordance with claim 1.

Having a controller so programmed, i.e. to selectively cause a small balancing current to flow, allows for a modest degree of charging and discharging of the energy storage device in one or more chain-link modules to be carried out to adequately share, or balance, amongst the chain-link modules the amount of energy so stored, without the need to utilise the much larger discharge current which would otherwise result in significantly higher energy losses.

Deviation of the energy stored by a given chain-link module from the desired target energy value is undesirable because it can lead to the said chain-link module being considered faulty or an associated rapid discharge circuit being triggered. The latter can eventually lead the controller of the power dissipating converter to cause the whole power conversion scheme within which the power dissipating converter is located to be isolated from the remainder of the associated power transfer network and thereby interrupt the transfer of power within the network.

Moreover, the provision of such a balancing current allows other, conventional control elements of the controller, such as a duty cycle control element and associated chain-link module sorting algorithm, to control the required switching into and out of circuit of the energy storage devices within the various chain-link modules in order to help ensure such equal energy balancing.

In one embodiment of the invention, the controller causes the balancing current to flow by modifying an instantaneous voltage reference for at least one chain-link converter.

Causing the balancing current to flow in the foregoing manner reliably and succinctly permits ready control of the nature, e.g. amplitude and frequency, of the balancing current.

In accordance with the invention, the controller generates a voltage control signal to control the average voltage of the energy storage devices in the chain-link modules of each chain-link converter, the voltage control signal is utilised to at least in part determine the voltage reference for each chain-link converter, and the controller modifies the voltage reference it requires for at least one chain-link converter by adding a voltage offset signal to the voltage control signal.

In another embodiment of the invention, the controller generates a balancing control signal to balance the average voltage of the energy storage devices in the chain-link modules of one chain-link converter with the average voltage of the energy storage devices in the chain-link modules of the other chain-link converter, and the controller modifies the voltage references for the chain-link converters by adding the balancing control signal to one voltage reference and subtracting the balancing control signal from the other voltage reference.

Each of the aforementioned approaches provides a practical and readily implementable way of modifying the at least one voltage reference in the manner required to cause the balancing current to flow through the chain-link converters.

Optionally the controller is further programmed to determine one of a maximum or minimum voltage stored by an individual energy storage device, to compare the said maximum or minimum individual stored voltage with the average voltage stored by all energy storage devices, and to cause the balancing current to flow when the difference between the said maximum or minimum individual stored voltage and the average voltage stored by all energy storage devices exceeds a predetermined threshold.

Such programming of the controller provides for the selective flow of the balancing current through each chain-link converter, e.g. only when the voltage stored by individual energy storage devices deviates by a given amount from a desired level.

In accordance with an embodiment of the invention, the balancing current is caused to oscillate at a subharmonic or superharmonic frequency of a power converter with which the power dissipating converter is intended to be used.

Having the balancing current oscillate at a subharmonic or superharmonic operating frequency, i.e. oscillate at any harmonic frequency other than the fundamental operating frequency of an associated power converter, helps to avoid interference with the fundamental operating frequency of the power converter, which might otherwise adversely impact on the operation of the power converter.

In addition, a balancing current oscillating at a harmonic frequency forms a balanced three-phase system which does not flow in the DC terminals (or the AC terminals of a power converter with which the power dissipating converter of the invention may, in use, be associated with).

Furthermore, such a harmonic balancing current can be easily detected, and thereby isolated, e.g. by way of a corresponding harmonic filter.

Optionally the balancing current is caused to oscillate at the second harmonic frequency of the fundamental operating frequency.

Operating at the second harmonic frequency provides for lower losses, e.g. than operating at higher harmonic frequencies.

Preferably the controller is still further programmed, when operating the power dissipating converter in the second active mode, to compare an instantaneous voltage reference for at least one chain-link converter with a measured DC voltage at the corresponding first or second DC terminal to determine the direction of current flow through the corresponding said chain-link converter.

Utilising a respective instantaneous voltage reference in the aforementioned manner helps to ensure that accurate information about the flow direction of current through the at least one chain-link converter is available to other control elements of the controller, such as a duty cycle control element and associated chain-link module sorting algorithm which helps to ensure equal balancing of the energy stored by all chain-link modules when the power dissipating converter is operating in the second active mode, and is otherwise sensitive to measurement and computational delay.

In a further preferred embodiment of the invention the controller determines that current is flowing into the said at least one chain-link converter and consequently that one or more energy storage devices therein is being charged when the respective instantaneous voltage reference is less than the corresponding measured DC voltage.

The controller may determine that current is flowing out of the said at least one chain-link converter and consequently that one or more energy storage devices therein is being discharged when the respective instantaneous voltage reference is greater than the corresponding measured DC voltage.

Each of the approaches set out above ensures that accurate current flow direction information is available.

According to a second aspect of the invention there is provided a method of controlling a power dissipation converter according to claim 7.

The method of the invention shares the benefits associated with the corresponding features of the power dissipating converter of the invention.

There now follows a brief description of preferred embodiments of the invention, by way of non-limiting example, with reference being made to the following figures in which:

Figure 1 shows a schematic view of a power conversion scheme incorporating an onshore power converter together with a power dissipating converter according to a first embodiment of the invention; and Figure 2 shows a schematic view of a portion of a controller which forms a part of a power dissipating converter shown in Figure 1.

A power dissipating converter 30 according to a first embodiment of the invention is shown schematically in Figure 1.

The power dissipating converter 30 comprises first and second DC terminals 12, 14, as described hereinabove, along with a converter limb 32 which extends between the first and second DC terminals 12, 14.

The converter limb 32 includes first and second limb portions 34, 36 that are separated by a ground terminal 38 which is for connection to ground 40, preferably via a surge arrestor 42.

Each limb portion 34, 36 includes a chain-link converter 44 which is connected in series with a power dissipating resistor 46. In turn, each chain-link converter 44 includes a plurality of series-connected chain-link modules 48, only one of which is shown in Figure 1.

Each chain-link module 48 includes a plurality of switching elements 50 that are connected in parallel with an energy storage device 52 in the form of a capacitor 54. In the embodiment shown each switching element 50 includes a semiconductor device in the form of, e.g. an Insulated Gate Bipolar Transistor (IGBT), which is connected in parallel with an anti-parallel diode. It is, however, possible to use other semiconductor devices, and a different type of energy storage device 52 may also be employed.

In the embodiment shown, each chain-link module 48 includes only a first pair of switching elements 50 that are connected in parallel with the capacitor 54 in a known half-bridge arrangement to define a 2-quadrant unipolar module. Switching of the switching elements 50 selectively directs current through the capacitor 54 or causes current to bypass the capacitor 54 such that the chain-link module 48 can provide zero or positive voltage and can conduct current in two directions.

In other embodiments, however, chain-link modules in which first and second pairs of switching elements and a capacitor are connected in a known full bridge arrangement to define a 4-quadrant bipolar module, may also be used instead of some or all of the aforementioned 2-quadrant unipolar modules.

In any event, nevertheless, each chain-link module 48 is selectively operable to provide a voltage source and the corresponding chain-link converter 44 is selectively operable to provide a stepped variable voltage source.

The power dissipating converter 30 also includes a controller 70 that is programmed to operate the power dissipating converter 30 in first and second modes, the first mode being an inactive mode and the second mode being an active mode.

In the first inactive mode the power dissipating converter 30 is prevented from exchanging current with the DC network 20. This is achieved by having the controller 70 control the switching elements 50 of selected chain-link modules 48 within each chain-link converter 44 to switch the capacitors 54 in the said selected chain-link modules 48 into circuit, whereby the individual voltage sources the selected chain-link modules 48 provide combine and thereby allow the associated chain-link converter 44 to deliver a voltage source which matches the DC voltage presented at the corresponding DC terminal 12, 14 by the corresponding transmission cable 16, 18.

As a result of there being no exchange of current with the DC network 20, no power from the DC network 20 is dissipated by either power dissipating resistor 46, and all the DC power is instead converted to AC power by the power converter 10 for distribution via the onshore AC network 24.

In practice however, even when the power dissipating converter 30 is operating in the first inactive mode, there will occasionally be a mismatch between the cumulative voltage source provided by one or both of the chain-link converters 44 and the DC voltage presented at the corresponding DC terminal 12, 14, e.g. because of a need to draw a small amount of energy from a given chain-link module 48 to power the associated module control electronics and the commensurate minor depletion in the individual energy amount, i.e. voltage, that the said chain-link module 48 can provide.

Such an occasional mismatch causes a very low stray current, typically of only a few amps, to flow through the power dissipating converter 30, even though it is operating in the first inactive mode.

When occasionally flowing, the very low stray current can, however, be used to replenish the small amount of energy drawn, or otherwise lost, from one or more individual chain-link modules 48.

In any event, when the controller 70 is operating the power dissipating converter 30 in the aforementioned first inactive mode, it does so in a so-called "de-blocked" manner. This means that even once the controller 70 has controlled the switching elements 50 of selected chain-link modules 48 within each chain-link converter 44 to switch the capacitors 54 in the said selected chain-link modules 48 into circuit, whereby each chain-link converter 44 provides a cumulative voltage source that matches the DC voltage presented at the corresponding DC terminal 12, 14, the controller 70 continues to control and further monitor the individual energy sources, i.e. voltages, provided by each chain-link module 48 within each chain-link converter 44. This continued control and monitoring is done in combination with the individual module control electronics associated with each chain-link module 48, but nevertheless allows the controller 70 to decide when to switch to operating the power dissipating converter 30 in another mode, and in particular when to operate the power dissipating converter in a third mode, i.e. a balancing mode, as described below. Meanwhile, in the second active mode the power dissipating converter 30 exchanges a discharge current with the DC network 20 and power from the DC network 20 is dissipated by each power dissipating resistor 46.

More particularly, when operating the power dissipating converter 30 in the second active mode, the controller 70 is programmed to bypass the energy storage devices 52, i.e. capacitors 54, in all of the chain-link modules 48 in at least one chain-link converter 44 whereby the DC voltage presented at the corresponding DC terminal 12, 14 by the corresponding transmission cable 16 is applied to the corresponding power dissipating resistor 46, the discharge current flows and power is dissipated by the said corresponding power dissipating resistor 46.

The controller 70 may, optionally, during the remaining period that the power dissipating converter 30 is operating in the second active mode, be programmed to carry out a chain-link module 48 capacitor voltage and energy balancing activity. The controller 70 does this by controlling each chain-link converter 44 to provide a stepped variable voltage source which during a given operating period is both greater than and less than the DC voltage presented at the corresponding DC terminal 12, 14, whereby the discharge current is controlled to flow both into and out of the corresponding limb portion 34, 36 in order to affect the said voltage and energy balancing.

In addition, the controller 70 in the power dissipating converter 30 of the invention is further programmed, to operate the power dissipating converter 30 in a third mode, i.e. a balancing mode as mentioned above, in which the controller causes a balancing current I, significantly smaller than the discharge current, to flow through each chain-link converter 44.

More particularly, as shown with reference to Figure 2, the controller 70 causes the balancing current I to flow by modifying both a first instantaneous voltage reference 72 corresponding to the voltage the chain-link converter 44 in the first limb portion 34 is required to produce, and a second instantaneous voltage reference 74 corresponding to the voltage the chain-link converter 44 in the second limb portion 36 is required to produce.

More particularly still, in the embodiment shown, the controller 70 generates a voltage control signal 76 to control the average voltage of the energy storage devices 52, i.e. capacitors 54, in the chain-link modules 48 of each chain-link converter 44, the said voltage control signal 76 is utilised to at least in part determine the voltage reference 72, 74 for each chain-link converter 44, and the controller 70 modifies the voltage references 72, 74 for each chain-link converter 44 by adding a voltage offset signal 78 to the voltage control signal 76. Preferably the voltage offset signal 78 takes the form

$$Vsin(2\pi f)$$

where f is a chosen frequency, preferably a subharmonic or superharmonic operating frequency of a power converter 10 with which the power dissipating converter 30 is intended to be used.

The voltage offset signal 78 need not necessarily take this form however.

In another embodiment of the invention, the controller 70 instead generates a balancing control signal 80 to balance the average voltage of the energy storage devices 52, i.e. capacitors 54, in the chain-link modules 48 of one chain-link converter 44 with the average voltage of the capacitors 54 in the chain-link modules 48 of the other chain-link converter 44, and the controller 70 modifies the respective voltage reference 72, 74 for each chain-link converter 44 by adding the balancing control signal 80 to one voltage reference, e.g. the first voltage reference 72 for the chain-link converter 44 in the first limb portion 34, and subtracting the balancing control signal 80 from the other voltage reference, e.g. the second voltage reference 74 for the chain-link converter 44 in the second limb portion 36.

Returning to the embodiment shown, the controller 70 is further programmed to determine one of a maximum or minimum voltage stored by an individual energy storage device 52, i.e. individual capacitor 54, to then compare the said maximum or minimum individual stored voltage with the average voltage stored by all energy storage devices 52, i.e. all capacitors 54, and to cause the balancing current I to flow when the difference between the said maximum or minimum individual stored voltage and the average voltage stored by all energy storage devices 52 exceeds a predetermined threshold.

In addition, the controller 70 causes the balancing current I to oscillate at a subharmonic or superharmonic operating frequency of a power converter 10 with which the power dissipating converter 30 of the invention is intended to be used.

More preferably, the balancing current I is caused to oscillate at the second harmonic frequency of the fundamental operating frequency of the said power converter 10. Typically, the fundamental operating frequency of a power converter 10 is 50Hz, and so the balancing current I is caused to oscillate at 100Hz.

The balancing current I is significantly smaller than the discharge current, and by way of example the balancing current I preferably has a magnitude of less than 15A, which is at least two orders of magnitude smaller than a typical discharge current of several kiloamps that would normally flow while power dissipating converter 30 is operating in the second active mode.

The balancing current I is, however, larger than the very low, e.g. a few amps, stray current that occasionally flows when there is a voltage mismatch during operation of the power dissipating converter 30 in the first inactive mode.

Consequently, the balancing current is able to provide a desired, modest degree of charging and discharging of the energy storage device in one or more chain-link modules, so as to adequately share, or balance, amongst the chain-link modules the amount of energy so stored, for a considerably greater period of time than the stray current alone is able to achieve. In turn, this reduces the need to utilise the much larger discharge current to achieve such balancing of the energy stored amongst the chain-link modules, which otherwise would create significantly higher energy losses.

The balancing current I, when flowing, circulates between the power dissipating converter 30 of the invention and the known power converter 10, but can be observed also from the DC network 20.

In addition to the foregoing, the controller 70 is still further programmed, when operating the power dissipating converter of the invention in the second active mode, to compare the instantaneous voltage reference 72, 74 for each chain-link converter 44 with a measured DC voltage at the corresponding first or second DC terminal 12, 14 (i.e. measured at the first DC terminal 12 in the case of the first instantaneous voltage reference 72 for the chain-link converter 44 in the first limb portion 34 and measured at the second DC terminal 14 in the case of the second instantaneous voltage reference 74 for the chain-link converter 44 in the second limb portion 36 to determine the direction of current flow through the corresponding said chain-link converter 44.

In particular, the controller 70 determines that:

current is flowing *into* the corresponding chain-link converter 44, and consequently that one or more energy storage devices 52, i.e. one or more capacitors 54, therein is being charged, when the respective instantaneous voltage reference 72, 74 is less than the corresponding measured DC voltage; and

that current is flowing *out of* the corresponding chain-link converter 44, and consequently that one or more capacitors 54 therein is being discharged, when the respective instantaneous voltage reference 72, 74 is greater than the corresponding measured DC voltage.

Another embodiment of the power dissipating converter, not forming a part of the invention claimed in this application, may include a controller that is solely further programmed, when operating the said other embodiment power dissipating converter in the second active mode, to compare the instantaneous voltage reference for at least one chain-link converter with a measured DC voltage at the corresponding first or second DC terminal to determine the direction of current flow through the corresponding said chain-link converter, i.e. the said controller is not additionally further programmed to operate the said other embodiment power dissipating converter in the third balancing mode in which the controller causes a balancing current to flow through each chain-link converter.

Returning to the power dissipation converter 30 of the invention, in use it is controlled according to a method comprising the steps of:

(a) selectively operating the power dissipating converter 30 in a first inactive mode in which the power dissipating converter 30 is prevented from exchanging current with the DC network 20 connected in-use to the first and second DC terminals 12, 14 and no power from the DC network 20 is dissipated by either power dissipating resistor 46;
(b) selectively operating the power dissipating converter 30 in a second active mode in which the power dissipating converter exchanges a discharge current with the DC network 20 and power from the DC network 20 is dissipated by each power dissipating resistor 44; and
(c) selectively operating the power dissipating converter 30 in a third balancing mode in which the controller causes a balancing current I smaller than the discharge current to flow through each chain-link converter 44.

**Claims**

1. A power dissipating converter (30) for use with a power converter (10) configured to convert between AC power and DC power, the power dissipating converter (30) comprising:

first and second DC terminals (12, 14) for connection to a DC network (20);
a converter limb (32) extending between the first and second DC terminals (12, 14) and including first and second limb portions (34, 36) separated by a ground terminal (38) for connection to ground (40), each limb portion (34, 36) including a chain-link converter (44) connected in series with a power dissipating resistor (46), each chain-link converter (44) including a plurality of series-connected chain-link modules (48), each chain-link module (48) including a plurality of switching elements (50) connected in parallel with an energy storage device (52) whereby each chain-link module (48) is selectively operable to provide a voltage source and the corresponding chain-link converter (44) is selectively operable to provide a stepped variable voltage source; and
a controller (70) programmed to operate the power dissipating converter (30) in first and second modes, the first mode being an inactive mode in which the power dissipating converter (30) is prevented from exchanging current with a DC network (20) connected in-use to the first and second DC terminals (12, 14) and no power from the DC network (20) is dissipated by either power dissipating resistor (46), and the second mode being an active mode in which the power dissipating converter (30) exchanges a discharge current with the DC network (20) and power from the DC network (20) is dissipated by each power dissipating resistor (46),

**characterized in that**:

the controller (70) being further programmed to operate the power dissipating converter (30) in a third mode, the third mode being a balancing mode in which the controller causes a balancing current (I) smaller than the discharge current to flow through each chain-link converter (44);
wherein the controller (70) causes the balancing current (I) to flow by modifying an instantaneous voltage reference (72, 74) for at least one chain-link converter (44);

wherein:

the controller (70) is configured to generate a voltage control signal (76) to control the average voltage of the energy storage devices (52) in the chain-link modules (48) of each chain-link converter (44), and to utilize the voltage control signal (76) to at least in part determine the voltage reference (72, 74) for each chain-link converter (44), and to modify the voltage reference (72, 74) for at least one chain-link converter (44) by adding a voltage offset signal (78) to the voltage control signal (76), the voltage control signal (76) being an oscillating signal; or

the controller (70) is configured to generate a balancing control signal (80) to balance the average voltage of the energy storage devices (52) in the chain-link modules (48) of one chain-link converter (44) with the average voltage of the energy storage devices (52) in the chain-link modules (48) of the other chain-link converter (44), and to modify the voltage references (72, 74) for the chain-link converters (44) by adding the balancing control signal (80) to one voltage reference (72, 74) and subtracting the balancing control signal from the other voltage reference (72, 74), and to cause the balancing current (I) to oscillate at a subharmonic or superharmonic operating frequency of the power converter (10).

2. A power dissipating converter (30) according to any preceding claim wherein the controller (70) is further programmed to determine one of a maximum or minimum voltage stored by an individual energy storage device (52), to compare the said maximum or minimum individual stored voltage with the average voltage stored by all energy storage devices (52), and to cause the balancing current (I) to flow when the difference between the said maximum or minimum individual stored voltage and the average voltage stored by all energy storage devices (52) exceeds a predetermined threshold.

3. A power dissipating converter (30) according to any preceding claim wherein the balancing current (I) is caused to oscillate at the second harmonic frequency of the fundamental operating frequency.

4. A power dissipating converter (30) according to any preceding claim wherein the controller (70) is still further programmed, when operating the power dissipating converter in the second active mode, to compare an instantaneous voltage reference (72, 74) for at least one chain-link converter (44) with a measured DC voltage at the corresponding first or second DC terminal (12, 14) to determine the direction of current flow through the corresponding said chain-link converter (44).

5. A power dissipating converter (30) according to Claim 4 wherein the controller (70) is configured to determine that current is flowing into the said at least one chain-link converter (44) and consequently that one or more energy storage devices (52) therein is being charged when the respective instantaneous voltage reference (72, 74) is less than the corresponding measured DC voltage.

6. A power dissipating converter (30) according to Claim 4 or Claim 5 wherein the controller (70) is configured to determine that current is flowing out of the said at least one chain-link converter (44) and consequently that one or more energy storage devices (52) therein is being discharged when the respective instantaneous voltage reference (72, 74) is greater than the corresponding measured DC voltage.

7. A method of controlling a power dissipation converter (30) for use with a power converter (10) configured to convert between AC power and DC power, the power dissipating converter (30) comprising: first and second DC terminals (12, 14) for connection to a DC network (20); and a converter limb (32) extending between the first and second DC terminals (12, 14) and including first and second limb portions (34, 36) separated by a ground terminal (38) for connection to ground (40), each limb portion (34, 36) including a chain-link converter (44) connected in series with a power dissipating resistor (46), each chain-link converter (44) including a plurality of series connected chain-link modules (48), and each chain-link module (48) including a plurality of switching elements (50) connected in parallel with an energy storage device (52) whereby each chain-link module (48) is selectively operable to provide a voltage source and the corresponding chain-link converter (44) is selectively operable to provide a stepped variable voltage source,

the method comprising the steps of:

(a) selectively operating the power dissipating converter (30) in a first mode, the first mode being an inactive mode in which the power dissipating converter (30) is prevented from exchanging current with a DC network (20) connected in-use to the first and second DC terminals (12, 14) and no power from the DC network (20) is dissipated by either power dissipating resistor (46);
(b) selectively operating the power dissipating converter (30) in a second mode, the second mode being an active mode in which the power dissipating converter (30) exchanges a discharge current with the DC network (20) and power from the DC network is dissipated by each power dissipating resistor (46); and
(c) selectively operating the power dissipating converter (30) in a third mode, the third mode being a balancing mode by causing a balancing current (I) smaller than the discharge current to flow through each chain-link converter (44), wherein the causing the balancing current (I) to flow comprises modifying an instantaneous voltage reference (72, 74) for at least one chain-link converter (44) by:

generating a voltage control signal (76) to control the average voltage of the energy storage devices (52) in the chain-link modules (48) of each chain-link converter (44), the voltage control signal (76) being utilised to at least in part determine the voltage reference (72, 74) for each chain-link converter (44), and modifying the voltage reference (72, 74) for at least one chain-link converter (44) by adding a voltage offset signal (78) to the voltage control signal (76), the voltage control signal (76) being an oscillating signal; or

generating a balancing control signal (80) to balance the average voltage of the energy storage devices (52) in the chain-link modules (48) of one chain-link converter (44) with the average voltage of the energy storage devices (52) in the chain-link modules (48) of the other chain-link converter (44), and modifying the voltage references (72, 74) for the chain-link converters (44) by adding the balancing control signal (80) to one voltage reference (72, 74) and subtracting the balancing control signal from the other voltage reference (72, 74), and the controller (70) causes the balancing current (I) to oscillate at a subharmonic or superharmonic operating frequency of the power converter (10).

## Patentansprüche

1. Leistungsabführender Wandler (30) zur Verwendung mit einem Leistungswandler (10), der konfiguriert ist, um zwischen Wechselstrom und Gleichstrom umzuwandeln, wobei der leistungsabführende Wandler (30) umfasst:

erste und zweite Gleichstromanschlüsse (12, 14) zur Verbindung mit einem Gleichstromnetz (20);
einen Wandlerschenkel (32), der sich zwischen dem ersten und zweiten Gleichstromanschluss (12, 14) erstreckt und erste und zweite Schenkelabschnitte (34, 36) beinhaltet, die durch einen Erdungsanschluss (38) zur Verbindung mit der Erde (40) getrennt sind, wobei jeder Schenkelabschnitt (34, 36) einen Kettengliedwandler (44) beinhaltet, der in Reihe mit einem leistungsabführenden Widerstand (46) verbunden ist, wobei jeder Kettengliedwandler (44) eine Vielzahl von in Reihe verbundenen Kettengliedmodulen (48) beinhaltet, wobei jedes Kettengliedmodul (48) eine Vielzahl von Schaltelementen (50) beinhaltet, die parallel mit einer Energiespeichervorrichtung (52) verbunden sind, wodurch jedes Kettengliedmodul (48) selektiv betreibbar ist, um eine Spannungsquelle bereitzustellen, und der entsprechende Kettengliedwandler (44) selektiv betreibbar ist, um eine gestufte variable Spannungsquelle bereitzustellen; und
eine Steuereinheit (70), die programmiert ist, um den leistungsabführenden Wandler (30) in einem ersten und zweiten Modus zu betreiben, wobei der erste Modus ein inaktiver Modus ist, in dem verhindert wird, dass der leistungsabführende Wandler (30) Strom mit einem angeschlossenen Gleichstromnetz (20) austauscht, das im Betrieb mit dem ersten und zweiten Gleichstromanschluss (12, 14) verbunden ist, und keine Leistung aus dem Gleichstromnetz (20) durch einen leistungsabführenden Widerstand (46) abgeführt wird, und wobei der zweite Modus ein aktiver Modus ist, in dem der leistungsabführende Wandler (30) einen Entladestrom mit dem Gleichstromnetz (20) austauscht und Leistung aus dem Gleichstromnetz (20) durch jeden leistungsabführenden Widerstand (46) abgeführt wird,

**dadurch gekennzeichnet, dass**:

die Steuereinheit (70) weiter programmiert ist, um den leistungsabführenden Wandler (30) in einem dritten Modus zu betreiben, wobei der dritte Modus ein Ausgleichsmodus ist, in dem die Steuereinheit einen Ausgleichsstrom (I), der geringer als der Entladestrom ist, veranlasst, durch jeden Kettengliedwandler (44) zu fließen;
wobei die Steuereinheit (70) den Ausgleichsstrom (I) veranlasst, durch Modifizieren einer momentanen Spannungsreferenz (72, 74) für mindestens einen Kettengliedwandler (44) zu fließen;

wobei:

die Steuereinheit (70) konfiguriert ist, um ein Spannungssteuersignal (76) zu erzeugen, um die Durchschnittsspannung der Energiespeichervorrichtungen (52) in den Kettengliedmodulen (48) eines jeden Kettengliedwandlers (44) zu steuern, und das Spannungssteuersignal (76) zu nutzen, um zumindest teilweise die Spannungsreferenz (72, 74) für jeden Kettengliedwandler (44) zu bestimmen, und die Spannungsreferenz (72, 74) für zumindest einen Kettengliedwandler (44) durch Hinzufügen eines Spannungsversatzsignals (78) zum Spannungssteuersignal (76) zu modifizieren, wobei das Spannungssteuersignal (76) ein oszillierendes Signal ist; oder
die Steuereinheit (70) konfiguriert ist, um ein Ausgleichssteuersignal (80) zu erzeugen, um die Durchschnittsspannung der Energiespeichervorrichtungen (52) in den Kettengliedmodulen (48) von einem Kettengliedwandler (44) mit der Durchschnittsspannung der Energiespeichervorrichtungen (52) in den Kettengliedmodulen (48) des anderen Kettenwandlers (44) auszugleichen, und die Spannungsreferenzen (72, 74) für die Kettengliedwandler (44) durch Hinzufügen des Ausgleichssteuersignals (80) zu einer Spannungsreferenz (72, 74) und Abziehen des Ausgleichssteuersignals von der anderen Spannungsreferenz (72, 74) zu modifizieren, und den Ausgleichsstrom (I) zu veranlassen, bei einer subharmonischen oder superharmonischen Betriebsfrequenz des Leistungswandlers (10) zu oszillieren.

2.  Leistungsabführender Wandler (30) nach einem vorstehenden Anspruch, wobei die Steuereinheit (70) weiter programmiert ist, um eine von einer maximalen oder minimalen Spannung zu bestimmen, die von einer individuellen Energiespeichervorrichtung (52) gespeichert wird, um die maximale oder minimale individuelle gespeicherte Spannung mit der Durchschnittsspannung zu vergleichen, die von allen Energiespeichervorrichtungen (52) gespeichert wird, und zu veranlassen, dass der Ausgleichsstrom (I) fließt, wenn die Differenz zwischen der maximalen oder minimalen individuellen gespeicherten Spannung und der Durchschnittsspannung, die von allen Energiespeichervorrichtungen (52) gespeichert wird, einen vorbestimmten Schwellenwert überschreitet.

3.  Leistungsabführender Wandler (30) nach einem vorstehenden Anspruch, wobei der Ausgleichsstrom (I) veranlasst wird, bei der zweiten harmonischen Frequenz der Grundbetriebsfrequenz zu oszillieren.

4.  Leistungsabführender Wandler (30) nach einem vorstehenden Anspruch, wobei die Steuereinheit (70) weiter programmiert ist, um, wenn der leistungsabführende Wandler im zweiten aktiven Modus betrieben wird, eine momentane Spannungsreferenz (72, 74) für mindestens einen Kettengliedwandler (44) mit einer gemessenen Gleichspannung am entsprechenden ersten oder zweiten Gleichstromanschluss (12, 14) zu vergleichen, um die Richtung des Stromflusses durch den entsprechenden Kettengliedwandler (44) zu bestimmen.

5.  Leistungsabführender Wandler (30) nach Anspruch 4, wobei die Steuereinheit (70) konfiguriert ist, um zu bestimmen, dass Strom in den mindestens einen Kettengliedwandler (44) fließt und dass folglich eine oder mehrere Energiespeichervorrichtungen (52) darin geladen werden, wenn die jeweilige momentane Spannungsreferenz (72, 74) geringer als die entsprechende gemessene Gleichspannung ist.

6.  Leistungsabführender Wandler (30) nach Anspruch 4 oder Anspruch 5, wobei die Steuereinheit (70) konfiguriert ist, um zu bestimmen, dass Strom aus dem mindestens einen Kettengliedwandler (44) fließt und dass folglich eine oder mehrere Energiespeichervorrichtungen (52) darin entladen werden, wenn die jeweilige momentane Spannungsreferenz (72, 74) größer als die entsprechende gemessene Gleichspannung ist.

7.  Verfahren zum Steuern eines leistungsabführenden Wandlers (30) zur Verwendung mit einem Leistungswandler (10), der konfiguriert ist, um zwischen Wechselstrom und Gleichstrom umzuwandeln, wobei der leistungsabführende Wandler (30) umfasst: erste und zweite Gleichstromanschlüsse (12, 14) zur Verbindung mit einem Gleichstromnetz (20); und einen Wandlerschenkel (32), der sich zwischen dem ersten und zweiten Gleichstromanschluss (12, 14) erstreckt und erste und zweite Schenkelabschnitte (34, 36) beinhaltet, die durch einen Erdungsanschluss (38) zur Verbindung mit der Erde (40) getrennt sind, wobei jeder Schenkelabschnitt (34, 36) einen Kettengliedwandler (44) beinhaltet, der in Reihe mit einem leistungsabführenden Widerstand (46) verbunden ist, wobei jeder Kettengliedwandler (44) eine Vielzahl von in Reihe verbundenen Kettengliedmodulen (48) beinhaltet, und jedes Kettengliedmodul (48) eine Vielzahl von Schaltelementen (50) beinhaltet, die parallel mit einer Energiespeichervorrichtung (52) verbunden sind, wodurch jedes Kettengliedmodul (48) selektiv betreibbar ist, um eine Spannungsquelle bereitzustellen, und der entsprechende Kettengliedwandler (44) selektiv betreibbar ist, um eine gestufte variable Spannungsquelle bereitzustellen.
wobei das Verfahren die Schritte umfasst zum:

(a) selektiven Betreiben des leistungsabführenden Wandlers (30) in einem ersten Modus, wobei der erste Modus ein inaktiver Modus ist, in dem verhindert wird, dass der leistungsabführende Wandler (30) Strom mit einem Gleichstromnetz (20) austauscht, welches im Betrieb mit dem ersten und zweiten Gleichstromanschluss (12, 14) verbunden ist, und keine Leistung aus dem Gleichstromnetz (20) durch einen leistungsabführenden Widerstand (46) abgeführt wird;

(b) selektiven Betreiben des leistungsabführenden Wandlers (30) in einem zweiten Modus, wobei der zweite Modus ein aktiver Modus ist, in dem der leistungsabführende Wandler (30) einen Entladestrom mit dem Gleichstromnetz (20) austauscht und Leistung aus dem Gleichstromnetz durch jeden leistungsabführenden Widerstand (46) abgeführt wird; und

(c) selektiven Betreiben des leistungsabführenden Wandlers (30) in einem dritten Modus, wobei der dritte Modus ein Ausgleichsmodus ist, durch Veranlassen, dass ein Ausgleichsstrom (I), der geringer als der Entladestrom ist, durch jeden Kettengliedwandler (44) fließt, wobei das Veranlassen des Fließens des Ausgleichsstroms (I) das Modifizieren einer momentanen Spannungsreferenz (72, 74) für mindestens einen Kettengliedwandler (44) umfasst, durch:

Erzeugen eines Spannungssteuersignals (76), um die Durchschnittsspannung der Energiespeichervorrichtungen (52) in den Kettengliedmodulen (48) eines jeden Kettengliedwandlers (44) zu steuern, wobei das Spannungssteuersignal (76) verwendet wird, um zumindest teilweise die Spannungsreferenz (72, 74) für jeden Kettengliedwandler (44) zu bestimmen und die Spannungsreferenz (72, 74) für mindestens einen Kettengliedwandler (44) durch Hinzufügen eines Spannungsversatzsignals (78) zum Spannungssteuersignal (76) zu modifizieren, wobei das Spannungssteuersignal (76) ein oszillierendes Signal ist; oder

Erzeugen eines Ausgleichssteuersignals (80), um die Durchschnittsspannung der Energiespeichervorrichtungen (52) in den Kettengliedmodulen (48) von einem Kettengliedwandler (44) mit der Durchschnittsspannung der Energiespeichervorrichtungen (52) in den Kettengliedmodulen (48) des anderen Kettengliedwandlers (44) auszugleichen, und Modifizieren der Spannungsreferenzen (72, 74) für die Kettengliedwandler (44) durch Hinzufügen des Ausgleichssteuersignals (80) zu einer Spannungsreferenz (72, 74) und Abziehen des Ausgleichssteuersignals von der anderen Spannungsreferenz (72, 74), und die Steuereinheit (70) den Ausgleichsstrom (I) veranlasst, bei einer subharmonischen oder superharmonischen Betriebsfrequenz des Leistungswandlers (10) zu oszillieren.

## Revendications

1. Convertisseur dissipateur de puissance (30) destiné à être utilisé avec un convertisseur de puissance (10) configuré pour convertir entre une puissance de courant alternatif, CA, et une puissance de courant continu, CC, le convertisseur dissipateur de puissance (30) comprenant :

des première et seconde bornes CC (12, 14) pour la liaison à un réseau CC (20) ;

une branche de convertisseur (32) s'étendant entre les première et seconde bornes CC (12, 14) et incluant des première et seconde parties de branche (34, 36) séparées par une borne de masse (38) pour une liaison à la terre (40), chaque partie de branche (34, 36) incluant un convertisseur de maillon de chaîne (44) relié en série à une résistance de dissipation de puissance (46), chaque convertisseur de maillon de chaîne (44) incluant une pluralité de modules de maillons de chaîne reliés en série (48), chacun module de maillon de chaîne (48) incluant une pluralité d'éléments de commutation (50) reliés en parallèle à un dispositif de stockage d'énergie (52), selon lequel chaque module de maillon de chaîne (48) peut fonctionner de manière sélective pour fournir une source de tension et le convertisseur de maillon de chaîne correspondant (44) peut fonctionner de manière sélective pour fournir une source de tension variable échelonnée ; et

un dispositif de commande (70) programmé pour faire fonctionner le convertisseur dissipateur de puissance (30) dans un premier et un deuxième modes, le premier mode étant un mode inactif dans lequel le convertisseur dissipateur de puissance (30) ne peut pas échanger de courant avec un réseau CC (20) relié en cours d'utilisation aux première et seconde bornes CC (12, 14) et aucune puissance provenant du réseau CC (20) n'est dissipée par l'une ou l'autre des résistances de dissipation de puissance (46), et le deuxième mode étant un mode actif dans lequel le convertisseur de dissipation de puissance (30) échange un courant de décharge avec le réseau CC (20) et la puissance provenant du réseau CC (20) est dissipée par chaque résistance de dissipation de puissance (46), **caractérisé en ce que** :

le dispositif de commande (70) étant en outre programmé pour faire fonctionner le convertisseur dissipateur de puissance (30) dans un troisième mode, le troisième mode étant un mode d'équilibrage dans lequel le dispositif de commande fait circuler un courant d'équilibrage (I) inférieur au courant de décharge à travers chaque convertisseur de maillon de chaîne (44) ;

dans lequel le dispositif de commande (70) fait circuler le courant d'équilibrage (I) en modifiant une référence de tension instantanée (72, 74) pour au moins un convertisseur à maillons de chaîne (44) ;

dans lequel :

le dispositif de commande (70) est configuré pour générer un signal de commande de tension (76) pour contrôler la tension moyenne des dispositifs de stockage d'énergie (52) dans les modules de maillon de chaîne (48) de chaque convertisseur de maillon de chaîne (44), et pour utiliser le signal de commande de tension (76) pour déterminer au moins en partie la référence de tension (72, 74) pour chaque convertisseur de maillon de chaîne (44), et pour modifier la référence de tension (72, 74) pour au moins un maillon de chaîne convertisseur (44) en ajoutant un signal de décalage de tension (78) au signal de commande de tension (76), le signal de commande de tension (76) étant un signal oscillant ; ou le dispositif de commande (70) est configuré pour générer un signal de commande d'équilibrage (80) pour équilibrer la tension moyenne des dispositifs de stockage d'énergie (52) dans les modules de maillons de chaîne (48) d'un convertisseur de maillon de chaîne (44) avec la tension moyenne tension des dispositifs de stockage d'énergie (52) dans les modules de maillons de chaîne (48) de l'autre convertisseur de maillon de chaîne (44), et modifier les références de tension (72, 74) pour les convertisseurs de maillons de chaîne (44) en ajoutant le signal de commande d'équilibrage (80) à une référence de tension (72, 74) et en soustrayant le signal de commande d'équilibrage à l'autre référence de tension (72, 74), et faire osciller le courant d'équilibrage (I) à une fréquence de fonctionnement sous-harmonique ou surharmonique du convertisseur de puissance (10).

2. Convertisseur dissipateur de puissance (30) selon une quelconque revendication précédente, dans lequel le dispositif de commande (70) est en outre programmé pour déterminer l'une d'une tension maximale ou minimale stockée par un dispositif de stockage d'énergie individuel (52), pour comparer ladite tension individuelle maximale ou minimale stockée par tous les dispositifs de stockage d'énergie (52), et pour faire circuler le courant d'équilibrage (I) lorsque la différence entre ladite tension individuelle maximale ou minimale stockée et la tension moyenne stockée par tous les dispositifs de stockage d'énergie (52 ) dépasse un seuil prédéterminé.

3. Convertisseur dissipateur de puissance (30) selon une quelconque revendication précédente, dans lequel le courant d'équilibrage (I) est amené à osciller à la seconde fréquence harmonique de la fréquence fondamentale de fonctionnement.

4. Convertisseur dissipateur de puissance (30) selon une quelconque revendication précédente, dans lequel le dispositif de commande (70) est en outre programmé, lors du fonctionnement du convertisseur dissipateur de puissance dans le deuxième mode actif, pour comparer une référence de tension instantanée (72, 74) pour au moins un convertisseur de maillon de chaîne (44) à une tension CC mesurée au niveau de la première ou de la seconde borne CC correspondante (12, 14) pour déterminer la direction du flux de courant à travers ledit convertisseur de maillon de chaîne correspondant (44).

5. Convertisseur dissipateur de puissance (30) selon la revendication 4, dans lequel le dispositif de commande (70) est configuré pour déterminer que le courant circule dans ledit au moins un convertisseur de maillon de chaîne (44) et par conséquent qu'un ou plusieurs dispositifs de stockage d'énergie (52) dans celui-ci est chargé lorsque la référence de tension instantanée respective (72, 74) est inférieure à la tension CC mesurée correspondante.

6. Convertisseur dissipateur de puissance (30) selon la revendication 4 ou la revendication 5, dans lequel le dispositif de commande (70) est configuré pour déterminer que le courant sort dudit au moins un convertisseur de maillon de chaîne (44) et par conséquent qu'un ou plusieurs convertisseurs de stockage d'énergie (52) dans celui-ci sont déchargés lorsque la référence de tension instantanée respective (72, 74) est supérieure à la tension CC mesurée correspondante.

7. Procédé de commande d'un convertisseur dissipateur de puissance (30) destiné à être utilisé avec un convertisseur de puissance (10) configuré pour convertir entre une puissance de courant alternatif, CA, et une puissance de courant continu, CC, le convertisseur dissipateur de puissance (30) comprenant : des première et seconde bornes CC (12, 14) pour une liaison à un réseau CC (20) ; et une branche de convertisseur (32) s'étendant entre les première et seconde bornes CC (12, 14) et incluant des première et seconde parties de branche (34, 36) séparées par une borne de terre (38) pour une liaison à la terre (40), chaque partie de branche (34, 36) incluant un convertisseur de maillon de chaîne (44) relié en série à une résistance de dissipation de puissance (46), chaque convertisseur de maillon de chaîne (44) incluant une pluralité de modules de maillons de chaîne reliés en série (48), et chaque module de maillon de chaîne (48) incluant une pluralité d'éléments de commutation (50) reliés en parallèle à un dispositif de stockage d'énergie (52), selon lequel chaque module de maillon de chaîne (48) peut fonctionner de manière sélective pour fournir une source de tension et le convertisseur de maillon de chaîne correspondant (44) peut fonctionner sélectivement pour fournir une source de tension variable échelonnée, le procédé comprenant les étapes consistant à :

(a) faire fonctionner sélectivement le convertisseur dissipateur de puissance (30) dans un premier mode, le premier mode étant un mode inactif dans lequel le convertisseur dissipateur de puissance (30) est empêché d'échanger du courant avec un réseau CC (20) relié en cours d'utilisation aux première et seconde bornes CC (12, 14) et aucune puissance provenant du réseau CC (20) n'est dissipée par l'une ou l'autre des résistances de dissipation de puissance (46) ;

(b) faire fonctionner sélectivement le convertisseur dissipateur de puissance (30) dans un deuxième mode, le deuxième mode étant un mode actif dans lequel le convertisseur dissipateur de puissance (30) échange un courant de décharge avec le réseau CC (20) et de l'énergie provenant du réseau CC est dissipée par chaque résistance de dissipation de puissance (46) ; et

(c) faire fonctionner sélectivement le convertisseur dissipateur de puissance (30) dans un troisième mode, le troisième mode étant un mode d'équilibrage en amenant un courant d'équilibrage (I) inférieur au courant de décharge à circuler à travers chaque convertisseur de maillon de chaîne (44), dans lequel le fait de faire circuler le courant d'équilibrage (I) comprend la modification d'une référence de tension instantanée (72, 74) pour au moins un convertisseur de maillon de chaîne (44) par :

la génération d'un signal de commande de tension (76) pour commander la tension moyenne des dispositifs de stockage d'énergie (52) dans les modules de maillons de chaîne (48) de chaque convertisseur de maillon de chaîne (44), le signal de commande de tension (76) étant utilisé pour déterminer au moins en partie la référence de tension (72, 74) pour chaque convertisseur de maillon de chaîne (44), et modifier la référence de tension (72, 74) pour au moins un convertisseur de maillon de chaîne (44) en ajoutant un signal de décalage de tension (78) au signal de commande de tension (76), le signal de commande de tension (76) étant un signal oscillant ; ou

la génération d'un signal de commande d'équilibrage (80) pour équilibrer la tension moyenne des dispositifs de stockage d'énergie (52) dans les modules de maillons de chaîne (48) d'un convertisseur de maillon de chaîne (44) avec la tension moyenne des dispositifs de stockage d'énergie (52) dans les modules de maillons de chaîne (48) de l'autre convertisseur de maillon de chaîne (44), et la modification des références de tension (72, 74) pour les convertisseurs de maillons de chaîne (44) en ajoutant le signal de commande d'équilibrage (80) à une référence de tension (72, 74) et en soustrayant le signal de commande d'équilibrage à l'autre référence de tension (72, 74), et le dispositif de commande (70) fait osciller le courant d'équilibrage (I) à une fréquence de fonctionnement sous-harmonique ou surharmonique du convertisseur de puissance (10).

Figure 1

Figure 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150028826 A1
- WO 2013000518 A1
- US 9954358 B2